# EUROPÄISCHE PATENTSCHRIFT

(11) **EP 1 127 483 B1**
(45) Veröffentlichungstag und Bekanntmachung des Hinweises auf die Patenterteilung: **28.07.2004**
(21) Anmeldenummer: 00103171.5
(22) Anmeldetag: 16.02.2000
(51) Int. Cl.: A01J 7/02

(54) **Verfahren zur Reinigung von Melkanlagen**
Device for cleaning milking installations
Dispositif de nettoyage d'installations de traite

(43) Veröffentlichungstag der Anmeldung: 29.08.2001
(73) Patentinhaber: Chemische Fabrik Dr. Weigert GmbH & Co. KG., 20539 Hamburg (DE)
(72) Erfinder: Lewens, Ingo, 21720 Grünendeich (DE); Wagemann, Wolfgang Dr., 22967 Tremsbüttel (DE)
(74) Vertreter: Glawe, Delfs, Moll & Partner

(56) Entgegenhaltungen:
- EP-A- 0 772 971
- DE-A- 2 106 223
- DE-A- 4 208 066
- DE-A- 19 600 475
- DE-A- 19 804 829
- GB-A- 2 264 156

## Beschreibung

Die Erfindung betrifft einen Verfahrenszyklus zur Benutzung und Reinigung von Melkanlagen, bei dem nach einer oder mehrerer Benutzungen der Melkanlage eine Reinigung mit einer wäßrigen Reinigungslösung durchgeführt wird.

Aus DE-A-1 960 0475 ist es bekannt eine saure und eine alkalische Reinigung abwechselnd, d.h. im Häufigkeitsverhältnis von 1:1 durchzüführen.

Aus EP-A-0 772 971 ist ein Verfahren zum Reinigen von Melkanlagen bekannt, daß neben dem Vorspülen und etwaigen weiteren Zwischenspülschritten getrennt mit einer alkalischen Reinigerlösung reinigt und separat mit einer sauren Desinfektionslösung desinfiziert. Aus DE-A-198 04 829 ist ein entsprechendes Verfahren bekannt, bei dem ausschließlich sauer gereinigt wird.

Beide Schriften schlagen vor, die alkalische bzw. saure Reinigungslösung zu stapeln, d. h. aufzufangen und ggf. nachgeschärft wiederzuverwenden. Der Erfindung liegt die Aufgabe zugrunde, ein Verfahren der eingangs genannten Art zu schaffen, das kostengünstig und wenig aufwendig ist und eine gute Reinigungsleistung aufweist. Insbesondere soll der Aufbau hartnäckiger Beläge über einen längeren Zeitraum vermieden oder zumindest vermindert werden.

Die Erfindung löst diese Aufgabe durch einen eingangs genannten Verfahrenszyklus, der dadurch gekennzeichnet ist, daß jede Reinigung entweder mit einer sauren oder einer alkalischen Reinigungslösung durchgeführt wird und daß das Häufigkeitsverhältnis von saurer zur alkalischer Reinigung zwischen 40:1 und 2:1 liegt.

Zunächst seien einige im Rahmen der Erfindung verwendete Begriffe erläutert.

Ein Verfahrenszyklus zur Benutzung und Reinigung von Melkanlagen umfaßt eine Abfolge von Benutzungs- und Reinigungsschritten. Der Begriff "Benutzung" bezeichnet den bestimmungsgemäßen Betrieb der Melkanlage. Der Begriff "Reinigung" bezeichnet die vorzugsweise nach jeder, ggf. jedoch nach mehreren Benutzungen fällige Säuberung der Melkanlage, vorzugsweise im Wege der sogenannten CIP-Reinigung.

Im Rahmen der Erfindung ist der Begriff "Melkanlage" weit zu verstehen und umfaßt sämtliche Anlagen und Einrichtungen, die beim Milcherzeuger Verwendung finden und mit Milch in Berührung kommen. Bspw. können unter diesem Begriff außer der eigentlichen Melkanlage mit den Melkzeugen ggf. separate Milchkühlanlagen fallen.

Erfindungsgemäß wird jede Reinigung innerhalb eines Verfahrenszyklus (also zwischen zwei Benutzungen) entweder mit einer sauren oder einer alkalischen Reinigungslösung durchgeführt. Erfindungsgemäß wird also bei jeder einzelnen Reinigung lediglich entweder sauer oder alkalisch gereinigt, es werden jedoch nicht beide Varianten bei einer einzigen Reinigung (zwischen zwei Benutzungen) kombiniert. Der Begriff "Reinigung" bezeichnet dabei den eigentlichen Reinigungsschritt mit einer gezielt auf eine bestimmte Reinigungsmittelkonzentration eingestellten (ggf. mehrfach wiederverwendeten) Reinigungslösung. Dieser eigentlichen Reinigung können Spülschritte mit Frischwasser oder gesammeltem Brauchwasser vorausgehen und/oder nachfolgen. Bevorzugt kann auch ein zusätzlicher Desinfektionsschritt vorgesehen sein, der jedoch, wie unten noch näher ausgeführt, unter Umständen entfallen kann.

Das Häufigkeitsverhältnis von saurer zur alkalischer Reinigung liegt erfindungsgemäß zwischen 40:1 und 2:1. Dies bedeutet, daß jede 41. bis jede 3. Reinigung zwischen zwei Benutzungen alkalisch erfolgt, die übrigen Reinigungen zwischen zwei Benutzungen sauer. Dieses Häufigkeitsverhältnis liegt bevorzugt zwischen 30:1 und 10:1, besonders bevorzugt bei 13:1. Da eine Melkanlage üblicherweise zweimal täglich (morgens und abends) benutzt wird, bedeutet ein Häufigkeitsverhältnis von 13:1, daß einmal pro Woche zu einem bestimmten Zeitpunkt alkalisch gereinigt wird, ansonsten sauer.

Die Erfindung hat erkannt, daß die beanspruchte Kombination von saurer und alkalischer Reinigung ein sehr gutes Reinigungsergebnis erzielt und gleichzeitig die Melkanlage auch nach längerer Benutzung und erfindungsgemäßer Reinigung im wesentlichen frei von hartnäckigen Belägen bleibt. Eine im wesentlichen alkalische Reinigung von Melkanlagen kann aufgrund des Erdalkaligehalts des Wassers und Calciumgehalts der Milch zu unerwünschten Kalk- bzw. Milchsteinablagerungen führen, die mittels aufwendiger separater Zwischenreinigungen entfernt werden müssen. Bei einer ausschließlich sauren Reinigung gemäß DE-A-198 04 829 kann es demgegenüber zu einer Bildung von Belägen aus Milchproteinen kommen, die ebenfalls nur aufwendig zu entfernen sind.

Der erfindungsgemäße Verfahrenszyklus, der saure und alkalische Reinigung in einem bestimmten Häufigkeitsverhältnis miteinander kombiniert, bewirkt dagegen eine gute Reinigung und hält Melkanlagen auch über Zeiträume von vielen Monaten belagfrei. Ferner hat sich überraschenderweise gezeigt, daß erfindungsgemäß die saure Reinigungslösung wesentlich häufiger gestapelt, d. h. wiederverwendet werden kann, als bei ausschließlich saurer Reinigung gemäß DE-A-198 04 829. Dies dürfte darauf zurückzuführen sein, daß die intermittierende alkalische Reinigung organische Protein- und Fettbeläge weitestgehend entfernt und so die Fett- und Eiweißbelastung der sauren Reinigungslösung vermindert. Diese behält ihre Reinigungsaktivität länger bei.

Die alkalische Reinigungslösung kann Oxidationsmittel enthalten. Solche Oxidationsmittel erleichtern das Ablösen organischer Beläge und wirken gleichzeitig desinfizierend. Die alkalische Reinigungslösung kann bspw. aktivchlorhaltig oder aktivsauerstoffhaltig sein. Als Aktivchlor freisetzende Bestandteile kommen bspw. Hypochlorite in Frage. Peroxide, Perburate oder dergleichen setzen Aktivsauerstoff frei. Auf separate Desinfektionsschritte (bspw. mit einer peressigsäurehaltigen Lösung) kann somit unter Umständen verzichtet werden.

Die saure Reinigungslösung wird bevorzugt aufgefangen und mehrfach wiederverwendet (gestapelt). Zweckmäßig ist es, wenn die wiederaufgefangene Lösung vor der erneuten Verwendung von Reinigerkonzentrat aufgeschärft wird. Der während eines Reinigungsschritts aufgetretene Säure- und Reinigungsmittelverlust wird durch dieses Aufschärfen ausgeglichen. Sofern sich bei der mehrfachen Verwendung der Reinigerlösung außer Konzentrations- auch Mengenverluste ergeben, können diese durch Zusatz von Wasser ausgeglichen werden. Bevorzugt schließt sich an eine saure Reinigung ein Desinfektionsschritt (bspw. mit einer peressigsäurehaltigen Lösung) an.

Diese saure Reinigungslösung kann 5 bis 40mal, bevorzugt 10 bis 20mal wiederverwendet werden. Bspw. kann sie wöchentlich ausgetauscht werden.

Geeignete pH-Werte für die saure und alkalische Reinigungslösung sind in den Ansprüchen 10 und 11 angegeben.

Der erfindungsgemäße Verfahrenszyklus kann mit üblichen Reinigungsautomaten für die (Stapel-)Reinigung von Melkanlagen durchgeführt werden. Bspw. kann der Spülautomat ENVISTAR® der Firma Westfalia Landtechnik GmbH, Oelde, eingesetzt werden. Die saure bzw. alkalische Reinigerlösung wird während des Reinigungsschrittes zweckmäßig im Kreislauf mehrfach durch die Melkanlage umgewälzt. Dieses mehrfache Umpumpen bewirkt einen intensiven Kontakt der zu reinigenden Flächen mit der Reinigerlösung und verbessert das Ablösen und Abtragen von Schmutz und sonstigen Rückständen durch intensivere mechanische Einwirkung der Reinigerlösung. Der Reinigungsschritt dauert zweckmäßigerweise mindestens 5, vorzugsweise 5 bis 15, besonders bevorzugt etwa 5 bis 10 Minuten.

Das Volumen der Reinigungslösung wird zweckmäßigerweise so gewählt, daß es mindestens dem Benetzungsvolumen der Melkanlage entspricht. Darunter versteht man das erforderliche Mindestvolumen, mit dem bereits beim einmaligen Durchspülen der Melkanlage eine Benetzung sämtlicher Oberflächen, die mit Milch in Berührung kommen können, erzielt wird.

Vor dem (sauren oder alkalischen) Reinigen kann ein Vorspülen entweder mit Frischwasser oder mit im sogenannten Vorspülstapelbehälter aufgefangenen gebrauchten Nachspülwasser erfolgen. Das gebrauchte Vorspülwasser wird vorzugsweise verworfen. Ggf. kann sich ein zweites Vorspülen mit Frischwasser anschließen, dieses Vorspülwasser wird bevorzugt im Vorspülstapelbehälter zwecks nochmaliger Verwendung als (erstes) Vorspülwasser aufgefangen. Das Vorspülen erfolgt vorzugsweise bei Raum- bzw. Leitungswassertemperatur.

Sowohl saures als auch alkalisches Reinigen findet bevorzugt bei Temperaturen oberhalb von Raumtemperatur, bevorzugt oberhalb von 40°C, besonders bevorzugt zwischen etwa 50 und 90°C statt. Die Temperatur der Reinigungslösung sollte oberhalb des Erweichungspunktes von Milchfett liegen. Bspw. kann eine Starttemperatur (Temperatur, mit der die Reinigungslösung in die Melkanlage eintritt) von 85°C gewählt werden, die im Laufe des Reinigens auf eine sogenannte Kreislauftemperatur von 40 bis 55°C absinken kann. Die Dauer des Reinigungsschrittes liegt bevorzugt bei etwa 7 Minuten.

An das saure bzw. alkalische Reinigen schließt sich bevorzugt ein Zwischen- bzw. Nachspülen (vorzugsweise mit Frischwasser) an. Das Spülen wird mit Raum- bzw. Leitungswassertemperatur durchgeführt. Das benutzte Spülwasser wird bevorzugt in dem Vorspülstapelbehälter zwecks Wiederverwendung als Vorspülwasser aufgefangen. An das Zwischenspülen schließt bevorzugt der o.g. Desinfektionsschritt an, der dann von einem Nachspülschritt gefolgt wird.

Wie bereits erwähnt, wird im Rahmen der Erfindung die saure Reinigung bevorzugt als gestapelte Reinigung durchgeführt. Die in bestimmten Intervallen erfindungsgemäß erfolgende alkalische Reinigung wird bevorzugt als verlorene Reinigung durchführt, die alkalische Reinigungslösung wird also nach einmaligem Gebrauch verworfen.

Die sauren und alkalischen Reinigungslösungen werden bevorzugt aus entsprechenden Reinigerkonzentraten angesetzt, die Reinigungslösungen sind bevorzugt 0,5 bis 1 gew.-%ige Lösungen solcher Konzentrate in Wasser. Geeignete saure Reinigerkonzentrate sind detailliert beschrieben in DE-A-198 04 829, auf die Offenbarung in dieser Schrift wird hiermit ausdrücklich Bezug genommen.

Ein solches Konzentrat kann gemäß folgender Generalrezeptur zubereitet werden:

| | |
|---|---|
| 30 - 70 % | Phosphorsäure |
| 2 - 12 % | nichtionische Tenside |
| 0,1 - 5 % | Hilfsstoffe (bspw. Dispergatoren, Lösungsvermittler, Korrosionsinhibitoren) |

Geeignete alkalische Reinigerkonzentrate sind beschrieben in EP-A-0 772 971, auch auf diese Offenbarung wird ausdrücklich Bezug genommen.

Ein alkalisches aktivchlorhaltiges Reinigerkonzentrat kann gemäß folgender Generalrezeptur zubereitet werden:

| | |
|---|---|
| 1 - 20 % | Alkalihydroxide (bevorzugt KOH oder NaOH) |
| 0 - 30 % | Alkalisilikate (z. B. Metasilikate, Wassergläser) |
| 0 - 30 % | Anorganische Phosphate (bevorzugt Tri-, Meta- oder Pyrophosphate) |
| 0 - 10 % | Komplex- oder Chelatbildner (bspw. NTA, EDTA, Salze von Phosphonsäuren, polymere Acrylate, Citrate) |
| 0,5 - 10 % | Aktivchlorträger wie bspw. Natriumhypochlorid |
| 0 - 7 % | Tenside |

Die Aufzählung der Bestandteile des Reinigerkonzentrats ist nicht abschließend, die Differenz zu 100 % ist Wasser. Sämtliche Prozentangaben verstehen sich als Gewichtsprozent.

Ein geeignetes alkalisches Konzentrat, das Aktivsauerstoff enthält, kann gemäß folgender Generalrezeptur zubereitet werden:

| | |
|---|---|
| 1 - 10 % | Alkalihydroxide |
| 0 - 10 % | Salze von Phosphonsäuren |
| 0 - 40 % | Anorganische Phosphate |
| 0,1 - 15 % | Peroxidverbindungen (bspw. Wasserstoff- oder Alkaliperoxide, Alkaliperborate) |
| 0 - 7 % | Tenside |

Tenside im Sinne der Erfindung sind jegliche Stoffe, die die Grenzflächenspannung einer wäßrigen Lösung herabsetzen können. Es sind anionische, kationische, nichtionische und amphotere Tenside verwendbar. Verwendbare Tenside sind in Römpps Chemielexikon, 9. Auflage, Band 6, Seite 4495 ff. unter dem Stichwort "Tenside" sowie in Ullmanns Encyclopaedia of Industrial Chemistry, 5. Auflage, Band 8, Seite 315 ff. unter dem Stichwort "Detergents" aufgeführt. Bevorzugt sind nichtionische oder amphotere Tenside verwendbar, bspw. Tenside aus der Klasse der Fettalkyloxalkylate.

Nach einer der beiden genannten Generalrezepturen hergestellte alkalische Reinigerkonzentrate weisen bei entsprechender Verdünnung zu einer alkalischen Reinigungslösung eine gute Desinfektionswirkung auf, so daß im Rahmen eines erfindungsgemäßen Verfahrenszyklus auf separate Desinfektionsschritte, wie sie bspw. EP-A-0 772 971 verlangt, nach einem alkalischen Reinigungsschritt verzichtet werden kann.

Die Erfindung wird nachfolgend anhand eines Beispiels erläutert.

Es werden folgende Konzentrate angesetzt:
- Saures Reinigerkonzentrat
   47,1 % Phosphorsäure
   6,8 % Nichtionisches Tensid (Alkylethoxylatpropoxylat)
   1,0 % Korrosionsinhibitor
   ad 100 % Wasser
- Desinfektionskonzentrat
   18,5 % Wasserstoffperoxid
   2,7 % Peressigsäure
   5,0 % Essigsäure
   7,5 % Salpetersäure
   ad 100 % Wasser
- Alkalisches Reinigerkonzentrat
   10,0 % Kaliumhydroxid
   7,3 % Natriumwasserglas
   10,0 % Kalium-Tripolyphosphat
   0,2 % Polyacrylat
   3,7 % Natriumhypochlorit
   ad 100 % Wasser

Sämtliche Prozentangaben sind Gewichtsprozente.

Zur automatischen Reinigung einer Melkanlage wurde eine Vorrichtung verwendet, wie sie in EP-A-0 772 971 offenbart ist. Nach jeder Benutzung der Melkanlage wurden dabei folgende Schritte durchgeführt:
a) Vorspülen mit im Vorspülstapelbehälter aufgefangenem Spülwasser bei der Temperatur des Behälterwassers für einen Zeitraum von ca. 2 bis 3 Minuten. Das Vorspülwasser wird anschließend verworfen.
b) Saure Reinigung bei einer Starttemperatur (Eintrittstemperatur der Reinigungslösung in die Melkanlage) von 85°C und einer Kreislauftemperatur von etwa 40 bis 55°C. Die Dauer der sauren Reinigung betrug 7 Minuten. Als saure Reinigungslösung wurde eine 1 %ige wäßrige Lösung des sauren Reinigerkonzentrats verwendet. Der pH-Wert der Lösung lag zwischen 1 und 2. Die saure Reinigungslösung wurde 13mal gestapelt und vor jeder erneuten Verwendung mit etwa 0,15 bis 0,3 Gew.-% Reinigerkonzentrat nachgeschärft.
c) Zwischenspülen mit kaltem Frischwasser, das anschließend im Vorspülstapelbehälter aufgefangen wird. Die Dauer der Zwischenspülung betrug ca. 3 bis 10 Minuten.
d) Desinfizieren mit einer 1 %igen wäßrigen Lösung des Desinfektioskonzentrats (Einwirkzeit ca. 3 bis 10 Minuten); die Lösung wird anschließend im Vorspülstapelbehälter aufgefangen.
e) Nachspülen mit kaltem Frischwasser, das anschließend im Vorspülstapelbehälter aufgefangen wird, für einen Zeitraum von ca. 3 bis 10 Minuten.

Nach 13 Benutzungen und anschließender Reinigung der Melkanlage wie oben angegeben wurde die gestapelte saure Reinigungslösung verworfen. Bei jeder 14. Reinigung wurde in Schritt b) statt einer sauren eine alkalische Reinigungslösung verwendet, die eine 1 %ige wäßrige Lösung des alkalischen Reinigerkonzentrats ist. Der pH-Wert der alkalischen Reinigungslösung lag zwischen 11 und 13. Im Anschluß an das alkalische Reinigen können die Schritte c) und d) entfallen.

Der genannte Verfahrenszyklus (jede 14. Reinigung alkalisch) wird über einen Zeitraum von 3 Monaten durchgeführt. In der so gereinigten Melkanlage fanden sich keine sichtbaren anorganischen oder organischen Beläge.

In einem weiteren Versuch wurde die Stapelzeit der sauren Hauptreinigungslösung von 13 auf 29 Reinigungen erhöht, d. h. lediglich jede 30. Reinigung erfolgte alkalisch. Nach 3 Monaten zeigten sich ebenfalls keine sichtbaren Beläge in der Melkanlage.

## Patentansprüche

1. Verfahrenszyklus zur Benutzung und Reinigung von Melkanlagen, bei dem nach einer oder mehreren Benutzungen der Melkanlage eine Reinigung mit einer wäßrigen Reinigungslösung durchgeführt wird, **dadurch gekennzeichnet, daß** jede Reinigung entweder mit einer sauren oder einer alkalischen Reinigungslösung durchgeführt wird und daß das Häufigkeitsverhältnis von saurer zu alkalischer Reinigung zwischen 40:1 und 2:1 liegt.

2. Verfahrenszyklus nach Anspruch 1, **dadurch gekennzeichnet, daß** das Häufigkeitsverhältnis von saurer zu alkalischer Reinigung zwischen 30:1 und 10:1 liegt, vorzugsweise 13:1 beträgt.

3. Verfahrenszyklus nach Anspruch 1 oder 2, **dadurch gekennzeichnet, daß** die alkalische Reinigungslösung Oxidationsmittel enthält.

4. Verfahrenszyklus nach Anspruch 3, **dadurch gekennzeichnet, daß** die alkalische Reinigungslösung aktivchlorhaltig ist.

5. Verfahrenszyklus nach Anspruch 3, **dadurch gekennzeichnet, daß** die alkalische Reinigungslösung aktivsauerstoffhaltig ist.

6. Verfahrenszyklus nach einem der Ansprüche 3 bis 5, **dadurch gekennzeichnet, daß** zusätzlich ein separater Desinfektionsschritt nach jeder sauren Reinigung vorgesehen ist.

7. Verfahrenszyklus nach einem der Ansprüche 1 bis 6, **dadurch gekennzeichnet, daß** die saure Reinigungslösung aufgefangen und mehrfach wiederverwendet wird.

8. Verfahrenszyklus nach Anspruch 3, **dadurch gekennzeichnet, daß** die saure Reinigungslösung vor jeder erneuten Verwendung aufgeschärft wird.

9. Verfahrenszyklus nach Anspruch 7 oder 8, **dadurch gekennzeichnet, daß** die saure Reinigungslösung 5 bis 40mal, bevorzugt 10 bis 20mal wiederverwendet wird.

10. Verfahrenszyklus nach einem der Ansprüche 1 bis 9, **dadurch gekennzeichnet, daß** die saure Reinigungslösung einen pH-Wert von 0,7 bis 4, bevorzugt 1 bis 2, aufweist.

11. Verfahrenszyklus nach einem der Ansprüche 1 bis 10, **dadurch gekennzeichnet, daß** die alkalische Reinigungslösung einen pH-Wert von 9 bis 14, bevorzugt 11 bis 13, aufweist.

## Claims

1. Process cycle for using and cleaning milking installations in which, after one or more uses of the milking installation, a cleaning with an aqueous cleaning solution is carried out, **characterized in that** each cleaning is carried out either with an acidic or an alkaline cleaning solution and **in that** the frequency ratio of acidic to alkaline cleaning is between 40:1 and 2:1.

2. Process cycle according to Claim 1, **characterized in that** the frequency ratio of acidic to alkaline cleaning is between 30:1 and 10:1, preferably 13:1.

3. Process cycle according to Claim 1 or 2, **characterized in that** the alkaline cleaning solution comprises oxidizing agent.

4. Process cycle according to Claim 3, **characterized in that** the alkaline cleaning solution comprises active chlorine.

5. Process cycle according to Claim 3, **characterized in that** the alkaline cleaning solution comprises active oxygen.

6. Process cycle according to one of Claims 3 to 5, **characterized in that**, in addition, a separate disinfection step is provided after each acidic cleaning.

7. Process cycle according to one of Claims 1 to 6, **characterized in that** the acidic cleaning solution is collected and repeatedly reused.

8. Process cycle according to Claim 3, **characterized in that** the acidic cleaning solution is fortified before each reuse.

9. Process cycle according to Claim 7 or 8, **characterized in that** the acidic cleaning solution is reused 5 to 40 times, preferably 10 to 20 times.

10. Process cycle according to one of Claims 1 to 9, **characterized in that** the acidic cleaning solution has a pH of 0.7 to 4, preferably 1 to 2.

11. Process cycle according to one of Claims 1 to 10, **characterized in that** the alkaline cleaning solution has a pH of 9 to 14, preferably 11 to 13.

## Revendications

1. Cycle de procédé, pour l'utilisation et le nettoyage d'installations de traite, dans lequel, après une ou plusieurs utilisations de l'installations de traite, on procède à un nettoyage au moyen d'une solution aqueuse de nettoyage, **caractérisé en ce que** chaque nettoyage est effectué soit avec une solution de nettoyage acide, soit avec une solution de nettoyage basique et **en ce que** le rapport de fréquence du nettoyage acide au nettoyage basique se situe entre 40:1 et 2:1.

2. Cycle de procédé selon la revendication 1, **caractérisé en ce que** le rapport de fréquence du nettoyage acide au nettoyage basique se situe entre 30:1 et 10:1, de préférence à 13:1.

3. Cycle de procédé selon la revendication 1 ou 2, **caractérisé en ce que** la solution de nettoyage basique contient des agents oxydants.

4. Cycle de procédé selon la revendication 3, **caractérisé en ce que** la solution de nettoyage basique contient du chlore actif.

5. Cycle de procédé selon la revendication 3, **caractérisé en ce que** la solution de nettoyage basique contient de l'oxygène actif

6. Cycle de procédé selon l'une des revendications 3 à 5, **caractérisé en ce qu'**il est prévu en plus une étape de désinfection séparée après chaque nettoyage acide.

7. Cycle de procédé selon l'une des revendications 1 à 6, **caractérisé en ce que** la solution de nettoyage acide est récupérée et réutilisée plusieurs fois.

8. Cycle de procédé selon la revendication 3, **caractérisé en ce que** la solution de nettoyage acide est régénérée avant chaque nouvelle utilisation.

9. Cycle de procédé selon l'une des revendications 7 ou 8 **caractérisé en ce que** la solution de nettoyage acide est réutilisée 5 à 40 fois, de préférence 10 à 20 fois.

10. Cycle de procédé selon l'une des revendications 1 à 9 **caractérisé en ce que** la solution de nettoyage acide présente un PH de 0,7 à 4, de préférence de 1 à 2.

11. Cycle de procédé selon l'une des revendications 1 à 10 **caractérisé en ce que** la solution de nettoyage basique présente un PH de 9 à 14, de préférence de 11 à 13.
